# EUROPÄISCHE PATENTANMELDUNG

(11) **EP 1 187 011 A2**
(43) Veröffentlichungstag der Anmeldung: **13.03.2002**
(21) Anmeldenummer: 01101125.1
(22) Anmeldetag: 19.01.2001
(51) Int. Cl.: G06F 9/445

(54) **Verfahren zur Programmierung eines Steuergerätes**

(30) Priorität: 23.03.2000 DE 10014561
(71) Anmelder: Siemens Aktiengesellschaft, 80333 München (DE)
(72) Erfinder: Müller, Gerold, 35516 Münzenberg (DE)
(74) Vertreter: Rassler, Andrea, Dipl.-Phys.

(57) **Zusammenfassung**

Die Erfindung betrifft ein Verfahren zur Programmierung eines Steuergerätes, insbesondere für ein Kraftfahrzeug, welches durch ein extern dem Steuergerät zugeführtes Signal von einem Betriebsmode in einen Programmiermode umgeschaltet wird.

Bei einem Verfahren zum Programmieren eines Steuergerätes, welches ohne zusätzliche Hardware eine zuverlässige Speicherung für neue Programme und Daten ermöglicht, wird das externe Signal vor der Systeminitialisierung des Steuergerätes, in welcher mindestens ein Funktionsprogramm aufgerufen wird, an das Steuergerät gesendet, wodurch die Ausführung des Funktionsprogramms unterbunden und ein neuer Steuer- und/oder Regelablauf und/oder neue Daten übertragen und gespeichert werden.

## Beschreibung

Die Erfindung betrifft eine Verfahren zur Programmierung eines Steuergerätes, insbesondere für ein Kraftfahrzeug, welches durch ein extern dem Steuergerät zugeführtes Signal von einem Betriebsmode in einen Programmiermode umgeschaltet wird.

Aus der DE 37 17 012 A1 ist ein Verfahren zur Programmierung eines digitalen Steuergerätes bekannt. Dieses Steuergerät ist mit einer Diagnoseschnittstelle versehen, über welche dem Steuergerät ein Signal zugeführt wird, wobei dieses Signal eine Umschaltung des Steuergerät von einem Betriebsmode in einen Programmiermode bewirkt.

Um dem Steuergerät mitzuteilen, dass ein Umschalten vom Betriebsmode in den Programmiermode gewünscht wird, muss das Signal mindestens 2,5 Sekunden an der Diagnoseschnittstelle anliegen. Weiterhin ist vorgesehen, dass das Fahrzeug bei der Umschaltung des Steuergerätes sich nicht in Bewegung befindet. Daher wird die Fahrzeuggeschwindigkeit detektiert und nur im Stillstand eine Umprogrammierung zugelassen.

Besitzen Steuergeräte Flash-Speicher, so besteht die Möglichkeit, in diesem Speicher abgespeicherte Programme und Daten zu überschreiben und durch neue Programme und Daten zu ersetzen. Für das Überschreiben werden spezielle Schnittstellen des Prozessors verwendet. Diese Schnittstellen stehen in der Massenproduktion meistens nicht mehr zur Verfügung. Für das Überschreiben wird aber immer ein korrektes Funktionsprogramm des Steuergerätes benötigt. Ist im Speicher aber ein nicht korrektes Funktionsprogramm geladen, ist es anschließend nur mit einem hohen zusätzlichen Aufwand möglich, das Programm durch ein korrigiertes Funktionsprogramm zu überschreiben.

Der Erfindung liegt somit die Aufgabe zugrunde, ein Verfahren zur Programmierung eines Steuergerätes anzugeben, welches ohne zusätzliche Hardware eine zuverlässige Speicherung für neue Programme und Daten ermöglicht.

Erfindungsgemäß wird die Aufgabe dadurch gelöst, dass das externe Signal vor der Systeminitialisierung des Steuergerätes, in welcher mindestens ein Funktionsprogramm aufgerufen wird, an das Steuergerät gesendet wird, wodurch die Ausführung des Funktionsprogramms unterbunden und ein neuer Steuer- und/oder Regelablauf und/oder neue Daten übertragen und gespeichert werden.

Der Vorteil der Erfindung besteht darin, dass in der Initialisierungsphase des Boot-Programms dem Steuergerät schon mitgeteilt wird, dass eine Neuprogrammierung erfolgen soll. Mit Hilfe des Bootprogrammes ist es somit möglich, auch bei fertigen Steuergeräten neue Programme oder Daten einzulesen. Der Aufruf eines Funktionsprogrammes ist nicht notwendig, so dass für das Überschreiben kein Funktionsprogramm benötigt wird.

Vorteilhafterweise ist das extern dem Steuergerät zugeführte Signal eine codierte Information oder ein Diagnosebefehl. Als Triggersignal kann aber auch einfach nur ein High- oder ein Low-Pegel verwendet werden.

Insbesondere bei der Verwendung eines Diagnosebefehls ist es möglich, dass der Diagnosebefehl über dieselbe Schnittstelle an das Steuergerät übertragen werden kann, wie auch das neue Programm oder die neu einzulesenden Daten. Somit kann für die Umprogrammierung auf ein zusätzlichen Hardwareaufwand verzichtet werden.

In einer Ausgestaltung werden die neuen Daten und/oder Steuer- und/oder Regelabläufe gemeinsam in einer nichtflüchtigen, blockweise löschbaren Speichereinheit des zu programmierenden Steuergerätes abgelegt.

Durch die Verwendung der blockweise löschbaren Speichereinheit können Programme bzw. Daten bei kleiner Speicherplatzkapazität ständig neu überschrieben werden.

Um zu verhindern, dass die neuen Daten und/oder Programme von Unberechtigten übertragen werden, wird vor jeder Datenübertragung eine Zugriffsberechtigungsprüfung durchgeführt.

In einer Ausgestaltung wird das externe Signal dem Steuergerät über eine Datenleitung zugeführt, welche das zu programmierende Steuergerät mit anderen Steuergeräten verbindet. Über dieselbe Datenleitung werden auch die neuen Programme und Daten an das Steuergerät übertragen.

Die Erfindung lässt zahlreiche Ausführungsformen zu. Eine davon soll anhand der in der Zeichnung dargestellten Figuren näher erläutert werden.

Es zeigt:
- Fig. 1:: Vernetzung von Steuergeräten,
- Fig. 2:: Verfahren zur Programmierung eines Steuergerät mit Hilfe der in Fig. 1 dargestellten Einrichtung.

Gleiche Merkmale sind mit gleichen Bezugszeichen gekennzeichnet.

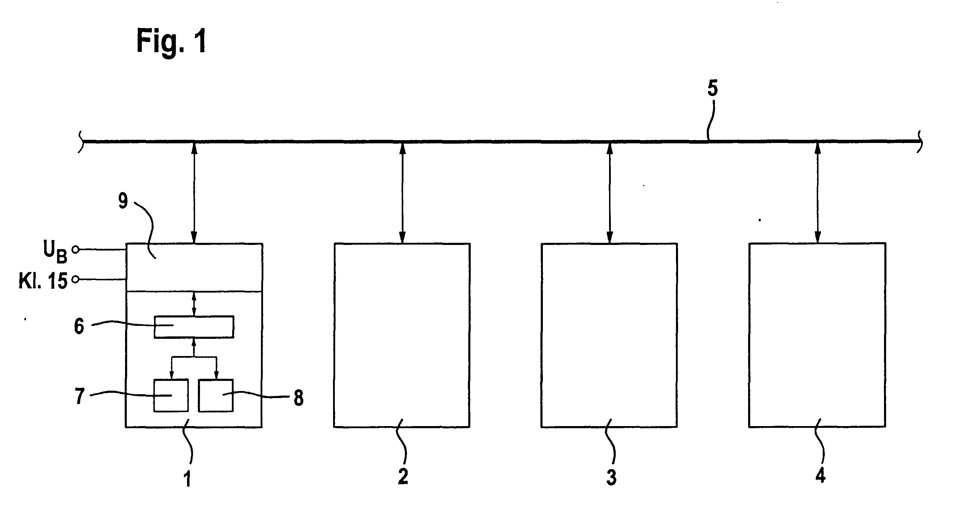

Figur 1 zeigt mehrere vernetzte Steuergeräte, wie sie in Kraftfahrzeugen eingesetzt werden. Dabei ist der Aufbau der Steuergeräte annähernd identisch, soll aber nur im Zusammenhang mit dem Steuergerät 1 erläutert werden. Das Steuergerät 1 ist mit der Betriebsspannung UB und mit Klemme 15 (geschaltetes Plus nach Batterie).

Das Steuergerät 1 enthält einen Mikrorechner 6, welcher einen Arbeitsspeicher 7 aufweist. Der Mikrorechner 6 ist über eine interne bidirektionale Datenleitung weiterhin mit einem Festwertspeicher 8 verbunden, welcher als Flashbaustein ausgebildet ist. Auf Grund der Ausbildung als Flash-Speicher müssen nicht unnötigerweise freie Speicherplätze zur Aufnahme neuer Programmteile vorgehalten werden, sondern es können Programmteile, die nicht mehr benötigt werden, blockweise gelöscht und die neuen Programme bzw. Daten in diesen freigewordenen Blöcken abgespeichert werden.

Darüber hinaus kommuniziert der Mikrorechner 6 über die Schnittstelle 9 mit dem Datenbus 5, an welchem weiterhin die Steuergeräte 2 und 3 sowie ein Diagnosegerät 4 angeschlossen sind. Da im Kraftfahrzeug viele verschiedene Steuer- und Regelungsabläufe ablaufen, werden diese dezentral in verschiedenen Steuergeräten überwacht. So ist das Steuergerät 1 für die Regelung der Einspritzmenge des Kraftfahrzeuges zuständig, das Steuergerät 2 ein ABS-Steuergerät und das Steuergerät 3 eine Geschwindigkeitsregeleinrichtung. Im Festwertspeicher des jeweiligen Steuergerätes 1, 2, 3 sind die jeweils erforderlichen Betriebsprogramme für das Steuergerät und die zugehörigen Parameter gespeichert.

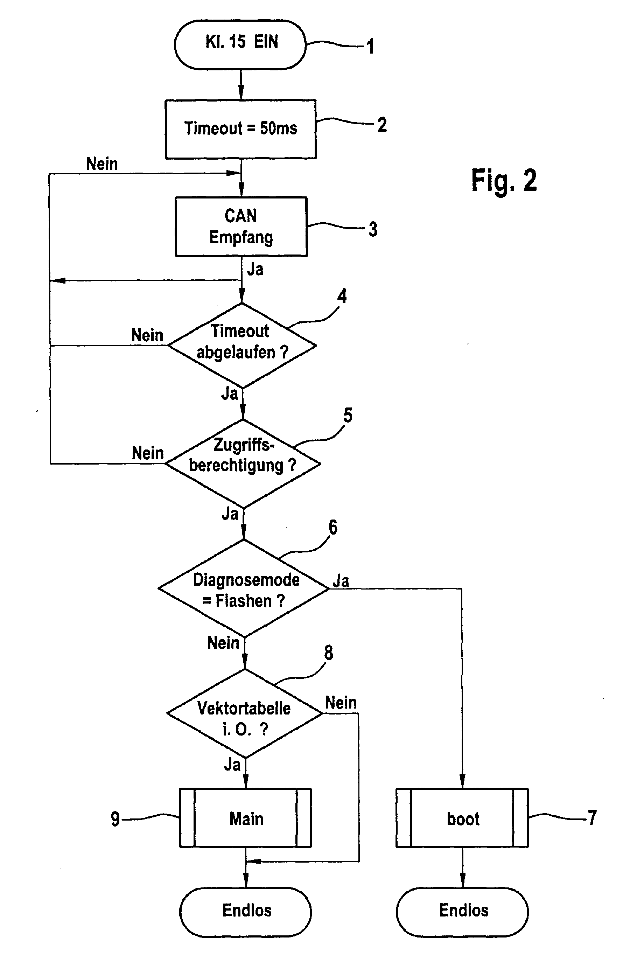

Mit Hilfe der Fig. 2 soll der Ablauf der Programmierung eines vernetzten Steuergerätes erläutert werden. Nach Einschalten des Steuergerätes 1 im Schritt 1 (Klemme 15 ein) wird ein Timer gestartet, welcher beispielsweise 50 ms läuft (Schritt 2). In dieser Phase prüft der Mikroprozessor 6, ob ein Triggersignal über den Datenbus 5 empfangen wird. (Schritt 3). Ist dies der Fall, wird ein bestimmter Bereich des Flash-Speichers 8 gelöscht. Anschließend wird im Schritt 4 geprüft, ob der Timer abgelaufen ist.

Nach Ablauf des Timers wird festgestellt, ob die vom CAN-Bus empfangene Kennung eine Zugriffsberechtigung zur Umprogrammierung des Steuergerätes enthält. (Schritt 5). Die übersandte Kennung wird dabei mit einer codierten Information, welche im Speicher 8 des Steuergerätes 1 abgelegt ist, verglichen.

Bei Übereinstimmung schaltet das Steuergerät 1 zur Neuprogrammierung vom Betriebsmode in den Diagnosemode (Schritt 6).

Ist der Diagnosemode eingeschaltet, wird das Boot-Programm gestartet (Schritt 7). Die neuen Daten und/oder Programme werden übertragen und im Festwertspeicher 8 gespeichert. Ist dieser Vorgang beendet erfolgt ein Restart und die Initialisierung beginnt von Neuem. Es wird wieder das Anliegen eines Triggersignales geprüft. Ist dies nicht der Fall, wird kein Diagnosemode eingestellt (Schritt 6), sondern in Schritt 8 eine Vektortabelle auf Plausibilität überprüft. In Form dieser Vektortabelle sind die Funktionsprogrammabläufe in der Speichereinheit 8 abgelegt, welche neben einer jeweiligen Adresse, die den Beginn einer Funktion kennzeichnenden Speicherzelle, mindestens eine Priorität für die Abarbeitung der Funktion, eine Zeitdauer zur wiederholten Abfrage sowie ein Status dieser Funktion aufweist. Führt die Plausibilitätsprüfung (z.B. eine Checksumprüfung) zu einem befriedigenden Ergebnis, wird das Funktionsprogramm gestartet (Schritt 9).

## Patentansprüche

1. Verfahren zur Programmierung eines Steuergerätes, insbesondere eines Kraftfahrzeuges, welches durch ein extern dem Steuergerät zugeführtes Signal von einem Betriebsmode in einen Programmiermode umgeschaltet wird, **dadurch gekennzeichnet, dass** das externe Signal vor der Systeminitialisierung des Steuergerätes, in welcher mindestens ein Funktionsprogramm aufgerufen wird, an das Steuergerät gesendet wird, wodurch die Ausführung des Funktionsprogramms unterbunden und ein neuer Steuer-und/oder Regelablauf und/oder neue Daten übertragen und gespeichert werden.

2. Verfahren nach Anspruch 1, **dadurch gekennzeichnet, dass** das extern dem Steuergerät zugeführte Signal eine codierte Information ist.

3. Verfahren nach Anspruch 1, **dadurch gekennzeichnet, dass** das extern zugeführte Signal ein Diagnosebefehl ist.

4. Verfahren nach Anspruch 1, **dadurch gekennzeichnet, dass** die neuen Daten und/oder Steuer- und/oder Regelabläufe gemeinsam in einer nichtflüchtigen, blockweise löschbaren Speichereinheit des Steuergerätes abgelegt werden.

5. Verfahren nach einem der vorhergehenden Ansprüche, **dadurch gekennzeichnet, dass** vor Übertragung der Daten und/oder der Steuer- und Regelabläufe eine Überprüfung einer Zugriffsberechtigung im zu progammierenden Steuergerät erfolgt.

6. Verfahren nach Anspruch 1, **dadurch gekennzeichnet, dass** das externe Signal dem Steuergerät über eine Datenleitung zugeführt wird, welche das zu programmierende Steuergerät mit anderen Steuergeräten verbindet.
